# FASCICULE DE BREVET EUROPEEN

(11) **EP 1 132 228 B1**
(45) Date de publication et mention de la délivrance du brevet: **27.06.2007**
(21) Numéro de dépôt: 01105681.9
(22) Date de dépôt: 07.03.2001
(51) Int. Cl.: B60H 1/00

(54) **Installation de ventilation de l'habitacle d'un véhicule automobile**
Belüftungsanlage des Fahrgastraums eines Kraftfahrzeugs
Ventilation installation for the passenger compartment of motor vehicles

(30) Priorité: 09.03.2000 FR 0003048
(43) Date de publication de la demande: 12.09.2001
(73) Titulaire: VALEO CLIMATISATION, 78321 La Verrière (FR)
(72) Inventeur: Vincent, Philippe, 28230 Epernon (FR)
(74) Mandataire: Léveillé, Christophe

(56) Documents cités:
- EP-A- 0 337 382

## Description

L'invention concerne une installation de ventilation de l'habitacle d'un véhicule automobile comportant un boîtier dans lequel sont aménagés une pluralité de conduits d'air, au moins deux conduits comportant chacun un volet, un mécanisme de transmission comportant un organe de commande qui présente une pluralité de surfaces et qui peut être entraîné par un moyen de commande, une ou plusieurs formes étant prévues sur les surfaces de l'organe de commande, chaque forme étant apte à entraîner au moins une chaîne de transmission actionnant un volet.

On connaît déjà (EP 0 337 382) une installation de ventilation de ce type. Elle comporte des volets déflecteurs d'air reliés à des leviers de transmission actionnés au moyen d'une came rotative fixée sur une paroi du boîtier.

Dans un tel dispositif, les axes des volets sont parallèles à l'axe de rotation de la came et donc tous parallèles entre eux. Ceci constitue une contrainte qui limite les possibilités de conception et d'adaptation du boîtier.

La présente invention a précisément pour objet une installation de ventilation de l'habitacle d'un véhicule automobile qui remédie à ces inconvénients.

A cet effet, selon l'invention, l'une au moins des surfaces de l'organe de commande n'est pas parallèle aux autres, l'une au moins des formes étant prévue dans ou sur cette surface, cette forme étant apte à entraîner une chaîne de transmission cinématique qui actionne au moins un volet qui n'est pas parallèle aux autres volets.

Grâce à cette caractéristique, on dispose de davantage de liberté pour concevoir le boîtier et la position des conduits de l'installation. Les volets peuvent être disposés perpendiculairement les uns aux autres, ou selon un angle d'orientation quelconque. La conception du boîtier est simplifiée et il est plus aisé de faire déboucher les différents conduits d'air à des endroits désirés. En particulier, le nombre et l'orientation des surfaces de l'organe de commande peuvent être adaptés en fonction des besoins. On peut donc commander un nombre important de volets disposés selon des orientations arbitraires.

L'organe de commande peut comporter une ou plusieurs surfaces cylindriques et/ou une ou plusieurs surfaces coniques.

Dans une variante de réalisation, l'organe de commande comporte au moins une forme constituée par une rainure prévue dans une surface de l'organe de commande ou par une came prévue sur une surface de l'organe de commande.

La chaîne de transmission peut comprendre un levier monté pivotant, ayant une première extrémité engagée dans la rainure et une seconde extrémité reliée directement ou indirectement à un volet.

Lorsque l'une au moins des formes est une came, la chaîne de transmission comprend de préférence un doigt ayant une première extrémité maintenue en appui sur la came, par exemple par un ressort, et une seconde extrémité reliée directement ou indirectement à un volet.

Dans une autre variante de réalisation, l'organe de commande comporte au moins une forme constituée par un engrenage prévu sur une surface de l'organe de commande.

Dans ce cas la chaîne de transmission comprend de préférence au moins un axe entraîné en rotation par un engrenage prévu sur une forme de l'organe de commande, cet axe entraînant directement ou indirectement un volet.

Le mécanisme de transmission peut être monté dans un support séparé rapporté sur le boîtier, ou directement sur le boîtier.

D'autres caractéristiques et avantages de la présente invention apparaîtront encore à la lecture de la description qui suit d'exemples de réalisations donnés à titre illustratif en référence aux figures annexées.

Sur ces figures :
- la figure 1 représente une vue en élévation d'une installation de ventilation conforme à l'invention ;
- la figure 2 représente une vue en coupe prise selon la ligne II-II de la figure 1 ; et
- les figures 3, 4 et 5 représentent des vues en élévation de variantes d'exécution d'une installation de ventilation conforme à la présente invention.

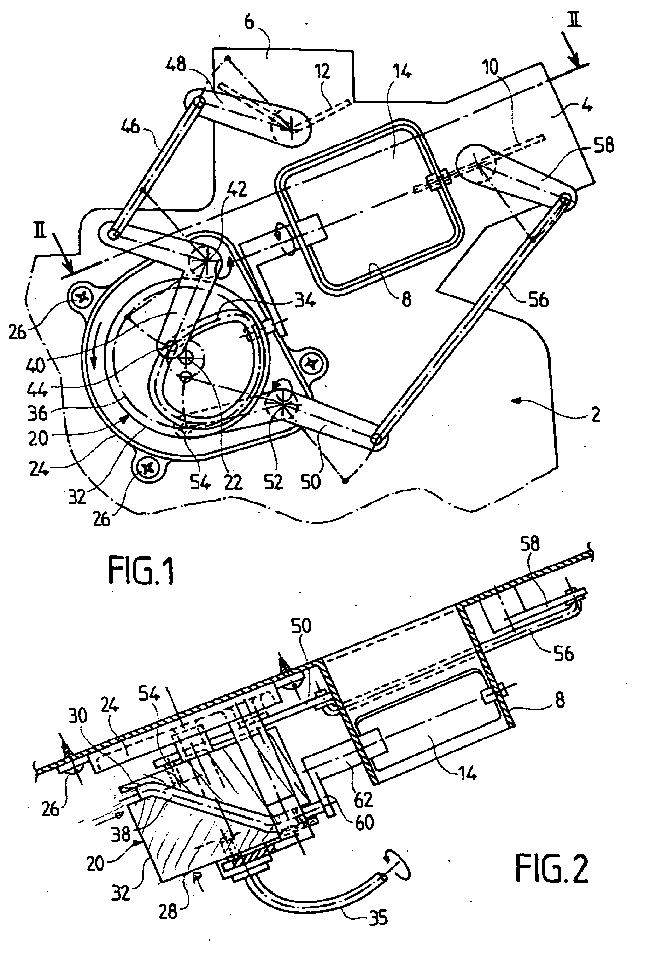

Sur la figure 1, la référence générale 2 désigne le boîtier d'une installation de ventilation de véhicule automobile conforme à l'invention. A l'intérieur de ce boîtier sont aménagés des conduits destinés à amener des flux d'air chaud ou froid à des endroits déterminés de l'habitacle du véhicule. Dans l'exemple de réalisation représenté, le boîtier 2 comporte trois conduits, à savoir un conduit d'aération 4, un conduit de dégivrage 6 destiné à amener de l'air chaud à la base du pare-brise et un conduit de chauffe-pieds destiné à amener de l'air chaud aux pieds des passagers et du conducteur.

Des volets, respectivement les volets 10, 12 et 14, sont montés pivotants autour d'un axe dans les conduits 4, 6 et 8. La rotation de ces volets permet, de manière classique, de contrôler les flux d'air qui passent à travers de chacun des conduits d'aération, de dégivrage et de chauffe-pieds.

Conformément à l'invention, les volets 10, 12 et 14 sont commandés au moyen d'un mécanisme de transmission comportant un organe de commande 20 qui est monté tournant autour d'un axe 22 sur le boîtier 2. Dans l'exemple de réalisation représenté, l'organe de commande 20 est plus exactement monté à l'intérieur d'un support 24 constitué par une pièce séparée rapportée par des vis 26 sur le boîtier 2. Toutefois, dans une variante de réalisation, l'organe de commande pourrait être monté directement sur le boîtier 2.

Dans l'exemple de réalisation représenté, l'organe de commande 20 est constitué par un cylindre comportant une face supérieure 28, une face inférieure 30 et une paroi cylindrique 32. Une forme est prévue sur chacune des surfaces 28, 30 et 32. Dans l'exemple de réalisation représenté sur les figures 1 et 2, ces formes sont constituées par des rainures 34, 36, 38, formées respectivement dans les faces 28, 30 et 34. Chacune de ces rainures est fermée, mais cette caractéristique n'est pas impérative et les rainures pourraient être également constituées par une rainure qui ne se referme pas sur elle-même.

L'organe de commande 20 peut être entraîné en rotation, à partir du tableau de bord du véhicule, par tout moyen classique, notamment par un flexible 35 entraîné par un bouton tournant fixé sur la planche de bord. Mais on pourrait également utiliser un autre système quelconque, comme une commande à câble tangentiel ou un actuateur électrique. Dans l'exemple représenté, l'organe de commande 20 est constitué d'une seule pièce, mais il pourrait également être constitué de plusieurs pièces assemblées.

Chacune des rainures 34, 36 et 38 est associée à un volet et elle est reliée à ce volet par une chaîne de transmission cinématique. La rainure 34 est associée au volet d'aération 12 par l'intermédiaire d'une chaîne de transmission constituée d'un levier 40 monté tournant sur un axe 42 et comportant, à l'une de ses extrémités, un pion 44 engagé dans la rainure 34. Dans cet exemple, le levier 40 est monté sur le support 24 mais il pourrait également être monté directement sur le boîtier 2, y compris dans le cas où l'installation comporte un boîtier rapporté séparé 24. A son autre extrémité, le levier 40 est relié à une bielle 46 elle-même connectée à un levier 48 solidaire du volet d'aération 12.

Lorsque l'organe de commande 20 est entraîné en rotation depuis l'habitacle par un utilisateur, le pion 44 se déplace à l'intérieur de la rainure 34 qui constitue un profil de came qui déplace l'extrémité du levier 40 et le fait pivoter autour de son axe 42, ce qui permet de faire passer le volet déflecteur 10 d'une position complètement ouverte à une position totalement ou partiellement fermée et réciproquement.

De manière similaire, la rainure 36 formée dans la face inférieure 30 de l'organe de commande 20 est associée au volet d'aération 10 par une chaîne de transmission cinématique qui actionne ce dernier. Cette chaîne est constituée d'un levier 50 monté pivotant autour d'un axe 52 fixé sur le support 24, ou directement sur le boîtier 2. A l'une de ses extrémités, le levier 50 comporte un pion 54 engagé dans la rainure circulaire 36 formée dans la face inférieure 30 de l'organe 20. A son autre extrémité, le levier 50 est connecté à une bielle 56 reliée elle-même à un bras 58 solidaire du volet d'aération 10.

Enfin, la rainure 38 formée dans la face cylindrique 32 de l'organe de commande 20 est associée au volet de chauffe-pieds 14 (voir figure 2). Dans ce cas, la chaîne de transmission cinématique est beaucoup plus courte que pour les deux volets décrits précédemment, puisqu'elle ne comporte qu'un levier 60 directement monté sur l'axe 62 autour duquel tourne le volet 14. Le volet 14 est guidé sur le boîtier 2, mais il pourrait aussi être guidé sur le support rapporté 24 et transmettre un mouvement à un volet dont l'axe de rotation serait déporté par rapport à celui du levier.

Comme on le constate, l'axe 62 du volet 14 est orthogonal (ou perpendiculaire) aux axes des volets 10 et 12. L'installation selon l'invention comporte donc un volet ayant un axe de rotation qui n'est pas parallèle aux autres axes. Ceci autorise, comme on l'a expliqué, une plus grande liberté dans le choix de la position des conduits de ventilation et dans la conception du boîtier.

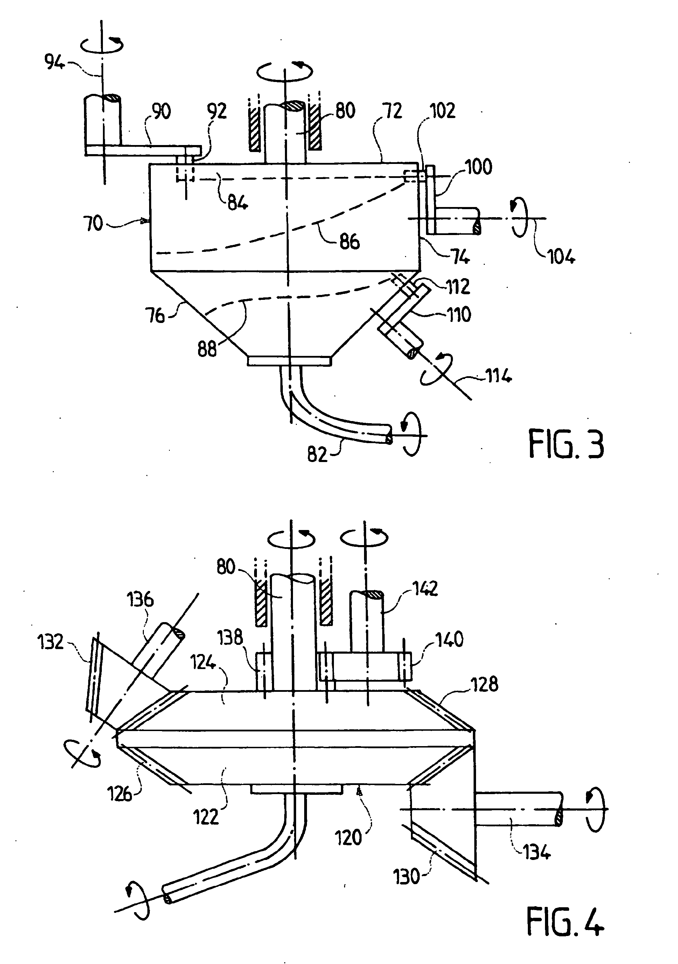

On a représenté schématiquement sur la figure 3 une variante de réalisation de l'organe de commande d'une installation conforme à la présente invention. Cet organe, désigné par la référence générale 70, comporte une face supérieure circulaire plane 72, une face cylindrique 74 et une face conique 76. Ainsi, alors que l'organe de commande 20, décrit en référence aux figures 1 et 2, ne comportait qu'une face non parallèle aux deux autres, en l'occurrence la face 32, l'organe 70 comporte trois faces 72, 74 et 76, dont aucune n'est parallèle aux autres.

De manière identique à ce qui a été décrit en référence aux figures 1 et 2, l'organe de commande 70 est monté tournant en rotation autour d'un axe 80 monté sur le support 24 ou directement sur le boîtier 2. Il est entraîné en rotation par tout dispositif classique tel que par exemple un flexible 82.
Des formes 84, 86 et 88 sont prévues respectivement sur les faces 72, 74 et 76. Comme dans le cas précédent, ces formes sont constituées par des rainures, représentées schématiquement en traits pointillés, formées dans les différentes faces de l'organe 70.

Un levier 90 comportant à l'une de ses extrémités un pion 92 engagé dans la rainure 84, est monté tournant autour d'un axe 94. Le levier 90 permet de commander l'ouverture ou la fermeture d'un premier volet (non représenté). De manière similaire, un levier 100 comportant un pion 102 engagé dans la rainure 86 est monté tournant autour d'un axe 104 et un levier 110 comportant à son extrémité un pion 112 engagé dans la rainure 88 est monté tournant autour d'un axe 114. Comme on peut le constater, aucun des axes 94, 104 et 114 n'est parallèle à l'un quelconque des deux autres axes. En conséquence, les volets associés (non représentés) sont montés tournants autour d'axes dont aucun n'est parallèle à l'un quelconque des deux autres.

Dans cet exemple une seule forme est formée dans chaque surface de l'organe 70. En variante, on pourrait prévoir plusieurs formes, par exemple deux, dans une même surface. On pourrait ainsi prévoir deux rainures dans la surface 72, deux rainures dans la surface 74, et une rainure dans la surface 76. Cet organe permettrait de commander deux volets parallèles à l'axe 94, deux volets parallèles à l'axe 104, et un volet parallèle à l'axe 114. On pourrait également entraîner plusieurs chaînes cinématiques, par exemple deux ou trois, au moyen d'une seule rainure dans laquelle seraient guidés deux ou trois pions convenablement espacés angulairement.

Selon une variante de réalisation (non représentée), les formes prévues dans les surfaces 72, 74, 76 peuvent être constituées non par des rainures, mais par un ou des profils de came prévus sur une ou plusieurs surfaces de l'organe de commande. La chaîne de transmission comprend un doigt ayant une première extrémité maintenue en appui sur la came et une seconde extrémité reliée directement ou indirectement à un volet.

On a représenté sur la figure 4 une deuxième variante de réalisation d'un organe de commande 120 faisant partie d'une installation de ventilation conforme à la présente invention. L'organe de commande comporte deux faces coniques 122 et 124. Des formes 126 et 128 sont prévues sur les faces coniques 122 et 124. Dans cet exemple, les formes ne sont pas constituées par des rainures, mais par des dentures d'engrenages coniques. Une chaîne de transmission est associée à chacune des formes 126 et 128. Ces chaînes de transmission, représentées partiellement, comprennent chacune un engrenage conique respectivement 130 et 132, monté tournant autour d'axes 134 et 136 sur le support 24 ou directement sur le boîtier 2. On comprend que les axes 134 et 136 peuvent actionner directement, ou indirectement par l'intermédiaire de bielles et de leviers, des volets du boîtier de l'installation de ventilation, comme on la décrit précédemment.

En outre, une troisième forme est prévue sur l'organe de commande 120. Elle est constituée par un engrenage cylindrique 138 coaxial à l'axe de rotation 80 de l'organe 120. L'engrenage 138 entraîne un pignon denté 140 monté tournant autour d'un axe 142, lui aussi parallèle à l'axe de rotation 80 de l'organe 120. L'axe 142 constitue le début d'une chaîne cinématique de transmission apte à actionner un volet (non représenté) faisant partie de l'installation de ventilation conforme à l'invention. Dans cet exemple, comme dans l'exemple représenté à la figure 3, les axes 134, 136 et 142 sont orientés chacun selon une direction propre de telle sorte que les volets associés à chacune des chaînes de transmission peuvent être également orientés selon une direction différente.

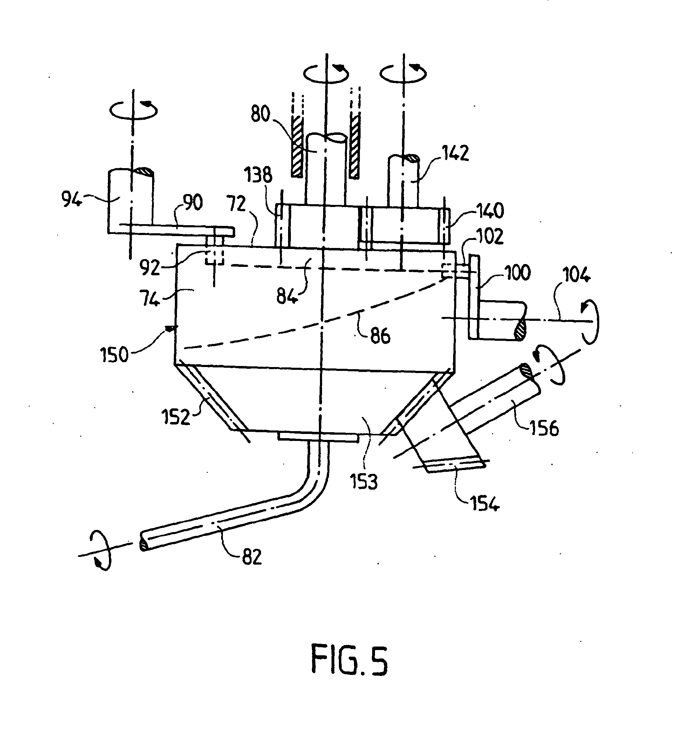

On a représenté sur la figure 5 une quatrième variante de réalisation d'un organe de commande faisant partie d'une installation de ventilation conforme à la présente invention. L'organe de commande 150 comporte une première face 72, similaire à la face 72 de l'organe de commande 70 représenté sur la figure 3. Une forme 84, constituée par une rainure, est formée dans la surface 72. Un levier 90 monté tournant autour d'un axe 94 et comportant à son extrémité mobile un pion 92 constitue le début d'une chaîne de transmission cinématique destinée à actionner un volet de déflexion d'air (non représenté) de l'installation de ventilation.

L'organe de commande 150 comporte une seconde forme 138 constituée par une denture d'engrenage cylindrique identique à celle qui a été décrite en référence à la figure 4. Une troisième forme est constituée par une rainure 86 creusée dans la surface cylindrique 74 de l'organe 150. Un levier 100 comporte à son extrémité 102 un pion qui s'engage dans la rainure 86. Le levier 100 est monté tournant autour d'un axe 104 qui constitue le début d'une chaîne cinématique apte à entraîner un volet de déflexion d'air.

Enfin, l'organe de commande 150 comporte une troisième forme constituée par une denture d'engrenage conique 152 formée sur une surface conique 153 de l'organe 150. La denture conique 152 engrène avec un pignon conique 154 monté tournant autour d'un axe 156 afin d'entraîner un quatrième volet d'air.

On constate que dans ce mode de réalisation, l'organe de commande 150 comporte quatre surfaces au lieu de trois dans les exemples précédents. On constate également que les formes sont de deux types différents, à savoir des rainures et des dentitions d'engrenage.

Bien entendu, l'invention n'est pas limitée aux formes de réalisation décrites précédemment à titre d'exemples et s'étend à d'autres variantes.

## Revendications

1. Installation de ventilation de l'habitacle d'un véhicule automobile comportant un boîtier (2) dans lequel sont aménagés une pluralité de conduits d'air (4, 6, 8), au moins deux conduits comportant chacun un volet (10, 12, 14), un mécanisme de transmission comportant un organe de commande (20, 70, 120, 150) qui présente une pluralité de surfaces (28, 30, 32, 72, 74 76, 122, 124, 153) et qui peut être entraîné par un moyen de commande (35, 82), une ou plusieurs formes (34, 36, 38, 84, 86, 88, 126, 128, 138, 152) étant prévues sur les surfaces de l'organe de commande (20, 70, 120, 150), chaque forme étant apte à entraîner au moins une chaîne de transmission actionnant un volet (10, 12, 14), **caractérisée en ce que** l'une au moins des surfaces de l'organe de commande (20, 70, 120, 150) n'est pas parallèle aux autres, l'une au moins des formes étant prévue sur cette surface, cette forme étant apte à entraîner une chaîne de transmission cinématique qui actionne au moins un volet (14) qui n'est pas parallèle aux autres volets (10, 12).

2. Installation de ventilation selon la revendication 1, **caractérisée en ce que** l'organe de commande (20, 70, 120, 150) comporte au moins une surface cylindrique (32, 74).

3. Installation de ventilation selon la revendication 1 ou 2, **caractérisée en ce que** l'organe de commande (20, 70, 120, 150) comporte au moins une surface conique (76, 122, 124, 153).

4. Installation de ventilation selon l'une quelconque des revendications 1 à 3, **caractérisée en ce que** l'organe de commande (20, 70, 120, 150) comporte au moins une forme (34, 36, 38) constituée par une rainure prévue dans une surface (28, 30, 32) de l'organe de commande.

5. Installation selon la revendication 4, **caractérisée en ce que** la chaîne de transmission comprend un levier (40, 50) monté pivotant, ayant une première extrémité engagée dans la rainure (34, 36, 38) et une seconde extrémité reliée directement ou indirectement à un volet (10, 12, 14).

6. Installation selon l'une quelconque des revendications 1 à 3, **caractérisée en ce qu'**elle comporte au moins une forme constituée par une came prévue sur une surface de l'organe de commande.

7. Installation selon la revendication 6, **caractérisée en ce que** la chaîne de transmission comprend un doigt ayant une première extrémité maintenue en appui sur la came et une seconde extrémité reliée directement ou indirectement à un volet.

8. Installation selon l'une quelconque des revendications 1 à 3,
**caractérisée en ce que** l'organe de commande (120, 170) comporte au moins une forme constituée par un engrenage (126, 128, 138, 152) prévu sur une surface de l'organe de commande.

9. Installation selon la revendication 8, **caractérisée en ce que** la chaîne de transmission comprend au moins un axe (134, 136, 142, 156) entraîné en rotation par un engrenage prévu sur une forme de l'organe de commande (120, 170), cet axe entraînant directement ou indirectement un volet.

10. Installation selon l'une quelconque des revendications 1 à 9, **caractérisée en ce que** le mécanisme de transmission est monté dans un support séparé (24) rapporté sur le boîtier (2).

## Claims

1. Ventilating system for the interior of a motor vehicle, comprising a housing (2) in which a plurality of air canals (4, 6, 8) are arranged, at least two canals each comprising a valve (10, 12, 14), a transmission mechanism comprising a control device (20, 70, 120, 150) which has a plurality of surfaces (28, 30, 32, 72, 74, 76, 122, 124, 153) and which can be driven by a drive means (35, 82), one or more shapes (34, 36, 38, 84, 86, 88, 126, 128, 138, 152) being provided on the surfaces of the control device (20, 70, 120, 150), each shape being capable of driving at least one transmission chain operating a valve (10, 12, 14), **characterised in that** at least one of the surfaces of the control device (20, 70, 120, 150) is not parallel to the others, at least one of the shapes being provided on this surface, this shape being capable of driving a kinematic transmission chain which operates at least one valve (14) that is not parallel to the other valves (10, 12).

2. Ventilating system of claim 1, **characterised in that** the control device (20, 70, 120, 150) comprises at least one cylindrical surface (32, 74).

3. Ventilating system of claim 1 or 2, **characterised in that** the control device (20, 70, 120, 150) comprises at least one conical surface (76, 122, 124, 153).

4. Ventilating system as claimed in any of claims 1 to 3, **characterised in that** the control device (20, 70, 120, 150) comprises at least one shape (34, 36, 38) consisting of a groove provided in one surface (28, 30, 32) of the control device.

5. Ventilating system of claim 4, **characterised in that** the transmission chain includes a pivotally mounted lever (40, 50) having a first end engaged in the groove (34, 36, 38) and a second end directly or indirectly connected to a valve (10, 12, 14).

6. System as claimed in any of claims 1 to 3, **characterised in that** it comprises at least one shape consisting of a cam provided on a surface of the control device.

7. System of claim 6, **characterised in that** the transmission chain includes a finger having a first end held against the cam and a second end connected directly or indirectly to a valve.

8. System as claimed in any of claims 1 to 3, **characterised in that** the control device (120, 170) comprises at least one shape consisting of a gear pair (126 128, 138, 152) provided on a surface of the control device.

9. System of claim 8, **characterised in that** the transmission chain includes at least one shaft (134, 136, 142, 156) driven in rotation by a gear pair provided on a shape of the control device (120, 170), this shaft directly or indirectly driving a valve.

10. System as claimed in any of claims 1 to 9, **characterised in that** the transmission mechanism is mounted in a separate support (24) added on to the housing (2).

## Patentansprüche

1. Belüftungsanlage für den Innenraum eines Kraftfahrzeugs, die ein Gehäuse (2) besitzt, in dem eine Mehrzahl von Luftkanälen (4, 6, 8) angeordnet sind, wobei mindestens zwei Leitungen jeweils eine Klappe (10, 12, 14) besitzen und ein Kraftübertragungsmechanismus ein Betätigungsorgan (20, 70, 120, 150) besitzt, das eine Mehrzahl von Flächen (28, 30, 32, 72, 74 76, 122, 124, 153) besitzt und von einem Antriebsorgan (35, 82) angetrieben werden kann, wobei eine oder mehrere Formen (34, 36, 38, 84, 86, 88, 126, 128, 138, 152) auf den Flächen des Betätigungsorgans (20, 70, 120, 150) vorgesehen sind, wobei jede Form geeignet ist, mindestens eine Übertragungskette anzutreiben, die eine Klappe (10, 12, 14) betätigen kann, **dadurch gekennzeichnet, dass** mindestens eine der Flächen des Betätigungsorgans (20, 70, 120, 150) nicht parallel zu den anderen ist, wobei mindestens eine dieser Formen auf dieser Fläche vorgesehen und diese Form geeignet ist, eine kinematische Kraftübertragungskette anzutreiben, die mindestens eine Klappe (14) betätigt, die nicht parallel zu den anderen Klappen (10, 12) ist.

2. Belüftungsanlage nach Anspruch 1, **dadurch gekennzeichnet, dass** das Betätigungsorgan (20, 70, 120, 150) mindestens eine zylindrische Fläche (32, 74) besitzt.

3. Belüftungsanlage nach Anspruch 1 oder 2, **dadurch gekennzeichnet, dass** das Betätigungsorgan (20, 70, 120, 150) mindestens eine konische Fläche (76, 122, 124, 153) besitzt.

4. Belüftungsanlage nach Anspruch 1 bis 3, **dadurch gekennzeichnet, dass** das Betätigungsorgan (20, 70, 120, 150) mindestens eine Form (34, 36, 38) besitzt, die aus einer Nute besteht, die auf einer Oberfläche (28, 30, 32) des Betätigungsorgans vorgesehen ist.

5. Belüftungsanlage nach Anspruch 4, **dadurch gekennzeichnet, dass** die Kraftübertragungskette einen Hebel (40, 50) besitzt, der schwenkbar angebracht ist und ein erstes, in der Nute (34, 36, 38) eingesetztes Ende und ein zweites, direkt oder indirekt mit einer Klappe (10, 12, 14) verbundenes Ende besitzt.

6. Belüftungsanlage nach Anspruch 1 bis 3, **dadurch gekennzeichnet, dass** sie mindestens eine Form besitzt, die aus einer auf einer Fläche des Betätigungsorgans vorgesehenen Nocke besteht.

7. Belüftungsanlage nach Anspruch 6, **dadurch gekennzeichnet, dass** die Kraftübertragungskette einen Finger besitzt, der ein erstes, gegen die Nocke gedrücktes Ende, und ein zweites, direkt oder indirekt mit einer Klappe verbundenes Ende besitzt.

8. Belüftungsanlage nach Anspruch 1 bis 3, **dadurch gekennzeichnet, dass** das Betätigungsorgan (120, 170) mindestens eine Form besitzt, die aus einem auf einer Fläche des Betätigungsorgans vorgesehenen Zahnradgetriebe (126, 128, 138, 152) besteht.

9. Belüftungsanlage nach Anspruch 8, **dadurch gekennzeichnet, dass** die Kraftübertragungskette mindestens eine Achse (134, 136, 142, 156) besitzt, die in Drehrichtung von einem Zahnradgetriebe angetrieben wird, das auf einer Form des Betätigungsorgans (120, 170) vorgesehen ist, wobei diese Achse direkt oder indirekt eine Klappe betätigt.

10. Belüftungsanlage nach Anspruch 1 bis 9, **dadurch gekennzeichnet, dass** der Kraftübertragungsmechanismus auf einem getrennten, am Gehäuse (2) angebauten Träger (24) angebracht ist.
